# EUROPÄISCHE PATENTSCHRIFT

(11) **EP 1 315 589 B1**
(45) Veröffentlichungstag und Bekanntmachung des Hinweises auf die Patenterteilung: **14.04.2004**
(21) Anmeldenummer: 01951690.5
(22) Anmeldetag: 18.07.2001
(51) Int. Cl.: B22F 1/00

(54) **MODEL ZUR VERWENDUNG ALS FILTER, KATALYSATOR ODER ERHITZER SOWIE VERFAHREN ZU SEINER HERSTELLUNG**
MODULE USED AS A FILTER, CATALYST OR HEATER AND A METHOD FOR PRODUCING THE SAME
MODULE SERVANT DE FILTRE, DE CATALYSEUR OU DE RECHAUFFEUR ET SON PROCEDE DE PRODUCTION

(30) Priorität: 26.08.2000 DE 10041992
(43) Veröffentlichungstag der Anmeldung: 04.06.2003
(73) Patentinhaber: GKN Sinter Metals GmbH, 42477 Radevormwald (DE)
(72) Erfinder: RÖTHIG, Thomas, 58332 Schwelm (DE)
(74) Vertreter: Patentanwälte Maxton & Langmaack
(86) Internationale Anmeldenummer: PCT/EP2001/008307
(87) Internationale Veröffentlichungsnummer: WO 2002/018079

(56) Entgegenhaltungen:
- EP-A- 0 819 459
- DE-A- 19 758 454
- DE-U- 8 910 190
- GB-A- 901 261
- US-A- 4 186 100

## Beschreibung

Die vorliegende Erfindung betrifft ein Modul zur Verwendung als Filter, Katalysator oder Erhitzer, umfassend mindestens eine Schicht mit offener Porosität, sowie ein Verfahren zur Herstellung eines derartigen Moduls und dessen Verwendung.

Unter Modulen im Sinne der Erfindung werden austauschbare, relativ komplex ausgebildete Teile einer größeren Einheit verstanden, welche eine in sich geschlossene Funktionseinheit bilden. Beispiele für derartige Module sind die aus der Filtertechnik bekannten Spiralmodule, Rohrmodule, Hohlfasermodule oder Flach- bzw. Kissenmodule.

Filter, Katalysatoren und Erhitzer werden üblicherweise in Form von Filterkerzen, Rohren, Platten, Papieren oder ähnlichem eingesetzt. Nachteilig an diesen ist insbesondere, daß diese über eine relativ geringe Filterfläche im vorgegebenen Volumen aufweisen. Daher wurden insbesondere in der Membrantechnik Module entwickelt, die es ermöglichen, auf einem geringen Raum eine große Fläche unterzubringen. Typische Vertreter dieser Module sind Spiralmodule und Rohrmodule. Diese werden aus polymeren oder keramischen Werkstoffen (Rohrmodule) hergestellt. Derartige Module haben jedoch den großen Nachteil, daß die in diesen eingesetzten Membranen entweder untereinander oder zu einem Gehäuse hin abgedichtet bzw. verklebt werden müssen. Deshalb weisen derartige Module oftmals einen nur relativ geringen Anwendungsbereich im Hinblick auf die einsetzbaren Temperaturen, die Umgebung, in welcher diese eingesetzt werden, insbesondere im Hinblick auf vorhandene chemische und/oder korrosive Substanzen und im Hinblick auf deren mechanische Festigkeiten, insbesondere bezüglich Transmembrandruck und Druckverlust aus Überströmung, auf.

EP 0 963 783 A1 offenbart ein Membranelement, enthaltend einen Kern und eine Umhüllung, die den Kern umschließt, wobei die Umhüllung aus sich zumindest teilweise überlappenden Polymerfolien gebildet wird, die im überlappungsbereich miteinander verschweißt sind.

Aufgabe der vorlie jeden Erfindung ist es, Module zur Verfügung zu stellen, welche die vorgenannten Nachteile nicht aufweisen.

Diese Aufgabe wird erfindungsgemäß gelöst durch ein Modul zur Verwendung als Filter, Katalysator oder Erhitzer, umfassend mindestens eine Schicht mit offener Porosität, welche eine einem in das Modul einströmenden Medium zugewandte Außenseite und eine dem einströmenden Medium abgewandte Innenseite aufweist, hergestellt aus einem sinterfähigen Material, ausgewählt aus einer Gruppe umfassend Metalle, Metalloxide, Metallverbindungen und/oder Metallegierungen, und wobei die Schicht taschenförmig ausgebildet ist und die Längsseiten der taschenförmig ausgebildeten Schicht durch Sinterung abgedichtet sind, und wobei zusätzlich die Schichten oder Bereiche einer Schicht zueinander durch Sinterung gehalten sind.

Sinterfähige Materialien sind insbesondere Pulver bzw. Pulvermischungen, beispielsweise aus Stählen wie Chrom-Nickel-Stahl, Bronzen, Nickelbasislegierungen wie Hastalloy, Inconel, Metall-Oxiden, -Nitriden, -Siliziden oder dergleichen, wobei die Pulvermischungen auch hochschmelzende BestandteiIe enthalten können wie beispielsweise Platin oder dergleichen. Das verwendete Pulver und seine Teilchengröße ist vom jeweiligen Einsatzzweck abhängig. Bevorzugte Pulver sind die Legierungen 316 L, 304 L, Inconel 600, Inconel 625, Monel und Hastalloy B, X und C. Weiterhin kann das sinterfähige Material ganz oder teilweise aus Kurzfasern bzw. Fasern sein, vorzugsweise Fasern mit Durchmessern zwischen etwa 0,1 und 250 µm und einer Länge von wenigen µm bis zu Millimetergröße, bis hin zu 50 mm wie z.B. Metallfaservlies.

Die Schicht kann ein Grünling sein, welcher durch Dünnschichtgießen, Sprühen oder Tauchen einer Suspension des sinterfähigen Materials in einem organischen Lösemittel wie Isopropanol oder Ethanol, gegebenenfalls unter Zusatz eines Bindemittels, hergestellt ist. Weitere verwendbare organische Lösemittel sind Methanol, Toluol, Trichlorethylen, Diethylether sowie niedermolekulare Aldehyde und Ketone, welche bei Temperaturen unter 100°C verdampfbar sind. Als Bindemittel können Wachse, Schellack, aber auch insbesondere polymere Verbindungen eingesetzt werden, wobei bevorzugt Polyalkylenoxide oder Polyglykole, insbesondere Polyethylenglykole, Verwendung finden. Polyalkylenoxide und -glykole werden vorzugsweise als Polymere und/oder Copolymere mit mittleren Molekulargewichten in einem Bereich von 100 bis 500.000 g/mol, bevorzugt 1.000 bis 350.000 g/mol, noch mehr bevorzugt 5.000 bis 6.5000 g/mol, verwendet, wobei der Anteil des Bindemittels in dem Gemisch zur Herstellung der Schicht etwa 0,5 bis 15 Vol.-%, bezogen auf das eingesetzte sinterfähige Material, beträgt. Nach Formung der Grünling-Schicht zu einem Modul wird dieses dann versintert, wobei Binder und Lösemittel vor bzw. durch den thermischen Prozeß rückstandsfrei entfernt werden. Es ist aber auch möglich, eine bereits gesinterte Schicht, hergestellt aus sinterfähigem Material, zu verwenden, wobei diese dann nach Anordnung zu einem Modul bzw. in einem Modul erneut versintert werden kann.

Die erfindungsgemäßen Module weisen große Vorteile im Hinblick auf die im Stand der Technik bekannten Module aus polymeren oder keramischen Werkstoffen auf. So weisen aus dem sinterfähigen Material hergestellte erfindungsgemäße Module erheblich höhere mechanische Festigkeiten sowie eine bessere Duktilität auf, welche bis an diejenigen von nichtgesinterten Metallen heranreichen. Dadurch sind sie auch in weiten Temperaturbereichen wie auch in chemischen und/oder korrosiven Umgebungen vielfältig einsetzbar. Werden die erfindungsgemäßen Module als Katalysatoren und/oder Filter verwendet, so sind deren Rückspüleigenschaften denjenigen herkömmlicher Module aus polymeren oder keramischen Werkstoffen weit überlegen. Durch diese hervorragenden Rückspüleigenschaften sind die erfindungsgemäßen Module ausgesprochen langlebig und arbeiten hocheffektiv.

Insbesondere werden jedoch durch die erfindungsgemäßen Module diejenigen Probleme vermieden, welche sich bei der Anfertigung der im Stande der Technik bekannten ergeben. Bei Wickelmodulen sind die Trennschichten durch einen Spacer getrennt und nur durch den Wickeldruck und/oder ein Anti-Teleskopingmittel (ATD - Anti-Telescoping Device) fixiert. Dabei ergibt sich das Problem, daß diese Schichten bzw. Bereiche einer Schicht bei der Herstellung des Moduls zueinander fixiert und gehalten werden müssen. Die erfindungsgemäßen Module bieten hier den Vorteil, daß dadurch, daß die Schicht aus sinterfähigem Material hergestellt ist, ein Halt und eine Fixierung der einzelnen Schichten des Moduls bzw. der Bereiche einer Schicht zueinander durch Sinterung erzielt wird. Ein Verschieben oder Versetzen der einzelnen Schichten in einem Modul bei Betrieb desselben wird dadurch vermieden, wodurch die erfindungsgemäßen Module betriebssicherer als im Stand der Technik bekannte Module sind und bei Verwendung derselben damit Betriebsausfälle vermieden werden können, wodurch letztendlich Kosten eingespart werden.

Schließlich wird durch die erfindungsgemäßen Module auch das Problem gelöst, daß diese durch Sinterung einfach und zuverlässig gedichtet werden können. So können beispielsweise bei Spiral- oder Wickelmodulen die dort verwendeten Schichten in Taschenform an ihren Längsseiten vollkommen abgedichtet werden, wodurch eine einfache und hervorragend funktionierende Trennung der einzelnen im Modul vorhandenen Räume, beispielsweise für das einströmende und ausströmende Medium, erreicht wird. Es ist daher bei den erfindungsgemäßen Modulen nicht notwendig, zusätzliche Dichtmittel, beispielsweise Dichtringe oder Klebungen, zu verwenden, wodurch die Lebensdauer und die Effektivität derselben entschieden erhöht wird. Darüber hinaus benötigen die erfindungsgemäßen Module noch nicht einmal ein Gehäuse oder aber Mittel zur Fixierung der einzelnen Schichten untereinander, da diese durch die Schicht selbst gebildet werden können. In einer weiteren Ausführungsform der Erfindung ist jedoch die Schicht in einem Modulgehäuse angeordnet.

In einer weiteren Ausführungsform der Erfindung umfaßt das Modul mindestens eine auf einem Trägerkörper angeordnete Schicht. Dieser Trägerkörper kann porös, auch gebohrt oder ein Gewebe sein. In diesem Fall kann der Trägerkörper eine Porosität aufweisen, welche größer ist als diejenige der Schicht im erfindungsgemäßen Modul, oder aber die Porosität kann gleich oder kleiner derjenigen der Schicht im Modul sein. Jedoch kann der Trägerkörper auch nicht porös sein. Er ist vorzugsweise flexibel ausgestaltet, beispielsweise ein dünnes Metallblech. Hierdurch wird vorteilhafterweise ermöglicht, daß eine derartige Schicht mit einem auf einer Seite derselben aufgebrachten Trägerkörper als äußere Schicht eines Moduls verwendet werden kann, so daß kein zusätzliches Gehäuse benötigt wird. Vorzugsweise ist dann der Trägerkörper mit der Schicht durch Sinterung fest verbindbar. Ein weiterer Vorteil der Anordnung der Schicht auf einem Trägerkörper, insbesondere einem porösen Trägerkörper, ist, daß hierdurch die mechanische Festigkeit der einzelnen Schichten in dem Modul und damit des Moduls selbst weiter erhöht wird, ohne daß die Funktion des Moduls selbst beeinträchtigt wird.

Bevorzugt ist die Schicht in dem Modul selbsttragend. Selbsttragend im Sinne der Erfindung bedeutet, daß die Schicht ohne jeglichen Trägerkörper verwendet werden kann und dabei nicht bricht oder brüchig wird. Weiter bevorzugt ist die Schicht eine Folie. Sie weist dann die für Kunstoffolien typischen Eigenschaften, insbesondere Flexibilität, auf, und ist wie diese den Bedürfnissen entsprechend verformbar.

Die Schicht ist in dem Modul taschenförmig ausgebildet. Derartige Taschen werden insbesondere in Spiralmodulen verwendet. Taschenförmig heißt dabei, daß die Schicht beispielsweise in der Mitte geknickt und übereinandergelegt wird. Hierdurch weist diese dann drei offene Seiten und eine geschlossene Seite auf. Durch diese taschenförmige Faltung der Schicht wird auf einfache Weise eine Trennung von Zuflußstrom und Filtratstrom erreicht.

Vorzugsweise ist die zur Tasche geformte Schicht auf der Innenseite an ihren Längsseiten zumindest teilweise verschlossen. Dieser Verschluß kann durch eine Verdickung erfolgen, beispielsweise durch einfaches Umlegen der Schicht an ihren Längsseiten in einem Bereich von etwa 2 bis 50 mm oder aber durch Einlegen von Querstreifen oder Umbördeln des Randbereiches mit einem Blechstreifen oder aber durch ein bereits bei der Herstellung der Schicht verdicktes Profil im Randbereich derselben erreicht werden. Außerdem kann auch ein schmaler Streifen, hergestellt auf gleiche Weise wie die Schicht selbst, auf diese im Randbereich aufgelegt werden. Durch diese Verdickung wird vorteilhafterweise eine vollständige Dichtung der zur Tasche geformten Schicht an ihren Längsseiten ermöglicht. Diese Dichtung kann nicht wie eine im Stand der Technik übliche Dichtung, welche durch Klebung oder mit Hilfe anderer Dichtmittel erfolgt, mit der Zeit undicht werden, sie bleibt vielmehr in der einmal hergestellten Art bestehen, wenn sie versintert ist. Durch die Verdickung im Randbereich wird beim Sintern der Schicht die Dichtung erzielt.

In einer weiteren Ausgestaltung der Erfindung wird die Schicht um ein Permeatrohr gewickelt, wobei dieses Permeatrohr porös ist. Das Permeatrohr ist dabei vorteilhafterweise dicht an die Innenseite bei einer zu einer Tasche geformten Schicht angeschlossen. Diese Porosität kann beispielsweise durch Bohrung erfolgen oder aber dadurch, daß das Permeatrohr selbst aus einem sinterfähigen Material als poröser Körper hergestellt wird. Dieses Permeatrohr hat die Aufgabe, das aus dem einströmenden Medium gewonnene Permeat, welches durch die dünne poröse Schicht mit offener Porosität ausgefiltert wurde, aus dem Modul als Permeatstrom abzuleiten.

In einer weiteren Form ist in der durch die Schicht gebildeten Tasche ein Permeatträger angeordnet. Dieser Permeatträger dient dazu, das aus dem in das Modul einströmenden Medium, welches über die Außenseite der Schicht strömt und mit dieser in Kontakt kommt, beispielsweise gefiltert wird, erhaltene Permeat in der Tasche zum Permeatrohr zu leiten und dort abzugeben. Der Permeatträger kann beispielsweise aus einem Drahtgewebe oder einem Lochblech sein, welches vorzugsweise mit der aus dem sinterfähigen Material hergestellten Schicht beim Versintern eine feste Verbindung eingeht. Anstatt des Permeatträgers kann auch die Schicht selbst auf ihrer Innenseite profiliert sein. Durch dieses Profil bildet sich in der Tasche, welche durch Zusammenklappen der Schicht erhalten wurde, ein Hohlraum, über welchen das gewonnene Permeat zum Permeatrohr geführt wird. Der Permeatträger ist schmaler als die im Modul angeordnete Schicht, und zwar typischerweise in einem Bereich von etwa 2 bis 50 mm, bevorzugt 3 bis 15 mm. Hierdurch wird sichergestellt, daß der Permeatträger beim Versintern und damit Abdichten der Längsseiten der taschenförmigen Schicht nicht über die Längsseiten derselben hinausragt, wodurch eine mögliche Undichtigkeit erzeugt werden könnte.

Bevorzugt wird der Permeatträger mit etwa dem 0,2- bis 2fachen Umfang des Permeatrohres um das Permeatrohr gewikkelt. Hierdurch wird sichergestellt, daß der Permeatträger in unmittelbarem Kontakt mit dem Permeatrohr steht. Der Permeatträger kann direkt auf das Permatrohr aufgelegt bzw. um dieses gewickelt werden. Hierdurch wird vorteilhafterweise erreicht, daß durch die beim Sintervorgang auftretende Schrumpfung der Permeatträger auf das Permeatrohr aufgepreßt wird. Der Permeatträger kann dann auf seiner dem Permeatrohr abgewandten Seite zur Dichtung mit sinterfähigem Pulver bestreut oder einer Paste aus Pulver und Binder bestrichen werden. Hierdurch wird eine Trennung des einströmenden Mediums vom Permeat ermöglicht. In einer anderen Ausführungsform kann der Permeatträger selbst auch etwas kürzer oder aber gleich lang wie die Schicht ausgebildet sein, wobei dann sichergestellt werden muß, daß bei der zu einer Tasche ausgebildeten Schicht die beiden zur offenen Seite der Tasche hin liegenden Seiten im Verhältnis zueinander so überstehen, daß die dem Permeatrohr abgewandte Taschenseite über die dem permeatrohr zugewandte Taschenseite hinaus steht. Dann kann die äußere und innere Taschenseite unmittelbar mit dem Permeatrohr durch Sinterung verbunden werden, wodurch dann eine Trennung des einströmenden Mediums vom Permeat erzielt wird.

In einer weiteren Ausgestaltung der Erfindung ist zur Trennung der porösen Schichten mindestens ein Abstandshalter zwischen den Taschen angeordnet. Dieser Abstandshalter kann aus einem Drahtgewebe bestehen, welches insbesondere bei Sinterung mit der Schicht eine feste Verbindung eingehen kann. Der Abstandshalter hat die Aufgabe, zwischen den einzelnen Schichten des Moduls, insbesondere den zur Tasche gebildeten Schichten, einen Hohlraum zu schaffen, durch welchen das einströmende Medium in das Modul eintreten kann. Statt der Auflage eines Abstandshalters auf die Schichten des Moduls ist es auch möglich, die Außenseiten der Schichten selbst mit einem Profil zu versehen, so daß hierdurch ein ausreichend großer Hohlraum für das in das Modul einströmende Medium geschaffen wird.

Bevorzugt sind die Schicht und/oder der Permeatträger und/oder die Trennschicht und/oder das Permeatrohr versintert. Hierdurch wird vorteilhafterweise eine feste Fixierung und Bindung der einzelnen Bestandteile des Moduls untereinander erreicht. Dieses gewährt eine größtmögliche Langlebigkeit und optimale Dichtung des gesamten Moduls. Zusätzliche Dichtmittel sind nicht erforderlich.

Weiterhin betrifft die Erfindung ein Verfahren zur Herstellung eines Moduls, wobei mindestens eine Schicht zu einem Modul fixiert und anschließend gesintert wird. Bevorzugt wird dabei als Schicht ein Grünling verwendet. Die Herstellung des Modules kann aber auch mit gesinterten Rohrschichten erfolgen. Eine weitere Stabilisierung kann beispielsweise durch eine Metalldrahtumwicklung oder durch Metallbänder erfolgen. Diese können dann nach dem Sinternvorgang vom Modul wieder abgenommen werden. Es ist jedoch auch möglich, zur Fixierung beispielsweise ein Metallblech zu verwenden, welches beim Sintern mit der Schicht eine feste Verbindung eingeht und somit gleichzeitig das Modulgehäuse bildet.

Vorteilhafterweise wird aus der Schicht eine Tasche gebildet, welche um ein Permeatrohr gewickelt wird. Bevorzugt wird dabei auf der Innsenseite der Schicht zumindest teilweise ein Verschluß, insbesondere durch eine Verdickung, an den Längsseiten der Schicht gebildet. Die Verdickung kann hierbei durch die Folie selbst erfolgen, beispielsweise durch Umklappen und Doppellegung eines schmalen Streifens im Randbereich der Längsseiten derselben, oder aber durch Einlegung eines streifens im Randbereich der Längsseiten der Schicht, wobei der Streifen der Schicht selbst entsprechen kann. Es kann aber auch beispielsweise ein Blechstreifen im Randbereich der Längsseiten der Schicht eingelegt werden. Des weiteren kann mittels eines metallischen Streifens die Längsseite der Schicht umbördelt werden. Durch diese Verdickung wird beim Versintern eine feste Verbindung in der zur Tasche geformten Schicht erreicht, wodurch diese hervorragend abgedichtet ist.

In die als Tasche ausgebildete Schicht wird bevorzugt ein Permeatträger eingelegt, wohingegen auf der Außenseite der Schicht bevorzugt eine Trennschicht angeordnet wird. Der Permeatträger und/oder die Trennschicht und/oder das Permeatrohr und/oder die Schicht werden vorzugsweise versintert. Hierdurch kann auf einfache Weise ein Modul, beispielsweise Spiralmodul hergestellt werden, in dem zunächst die einzelnen Schichten und gegebenenfalls Permeatträger und Trennschichten aufeinandergelegt, miteinander fixiert und dann in einem einzigen Sintervorgang miteinander versintert werden, so daß diese miteinander einen festen Körper bilden.

Schließlich betrifft die Erfindung die Verwendung eines Moduls als Filter und/oder Katalysator und/oder Erhitzer.

Diese und weitere Vorteile der Erfindung werden anhand der folgenden Zeichnung erläutert. Es zeigt:

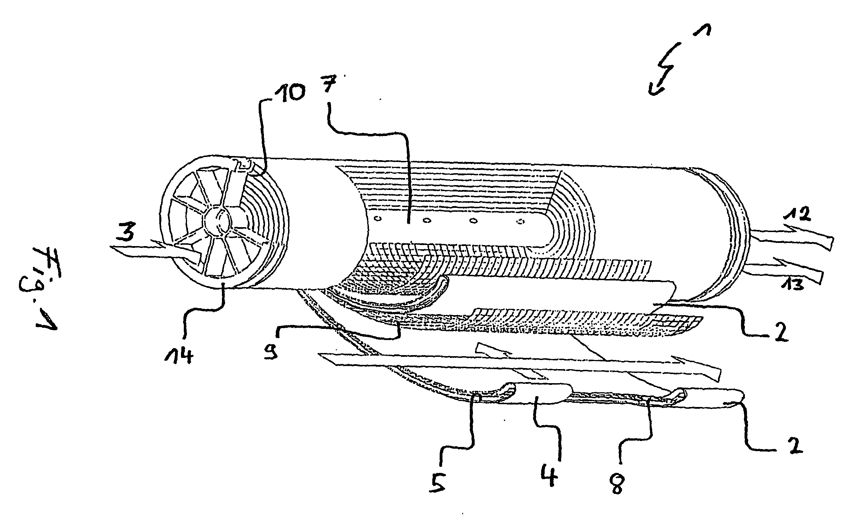

- Fig. 1: eine perspektivische Darstellung eines Spiralmoduls gemäß der Erfindung

Fig. 1 zeigt ein insgesamt mit dem Bezugszeichen 1 bezeichnetes Modul, welches als Spiralmodul ausgebildet ist. In diesem sind mehrere Schichten 2 durch Umklappen oder Zusammenlegen einer Schichtbahn in Querrichtung taschenförmig ausgebildet. In die durch die Schicht 2 gebildeten Taschen sind Permeatträger 8 eingelegt. Der auf der offenen Seite der durch die Schicht 2 gebildeten Taschen überstehende Permeatträger 8 wird um das Permeatrohr 7 gewickelt. Nach der Umwicklung wird er mit einem sinterfähigen Pulver versehen, welches idealerweise dem Pulver entspricht, aus welchem die Schicht 2 hergestellt ist. Zwischen den einzelnen zu einer Tasche geformten Schichten 2 sind Abstandshalter 9 eingelegt. Die Trennschichten 9 und der Permeatträger 8 sind aus einem mit der Schicht 2 versinterbaren Drahtgeflecht hergestellt. An ihren Längsseiten 10 weisen die Schichten 2 Verdickungen (nicht gezeigt) auf den Innenseiten 5 auf. Diese Verdickungen wurden durch eine bei der Herstellung der Schicht 2 im Randbereich der Längsseiten 10 derselben vorgenommene Profilierung hergestellt.

Weiterhin weist das in Fig. 1 gezeigte Modul 1 ein sogenanntes Anti-Telescoping-Mittel (ATD) 14 auf. Dieses ist jedoch nicht notwendiger Bestandteil des Moduls 1. Durch die Sektoren des Anti-Telescoping-Mittels 14 wird nun Medium 3 dem Modul 1 zugeführt. Das Medium 3 wird über den Abstandshalter 9 geführt. Hierbei wird das Medium 3 gefiltert. Es dringt von der Außenseite 4 der Schicht 2 über die Innenseite 5 derselben in die Tasche ein und wird über den Permeatträger 8 zum Permeatrohr 7 geführt, aus welchem es dann als Permeat 12 aus dem Modul 1 entnommen wird. Der Rückstand 13, welcher nicht filterbar ist, wird über den Abstandshalter 9 auf derselben Seite des Moduls 1 wie das Permeat 12 diesem entnommen, jedoch als getrennter Medium-Strom. Das in der Fig. 1 gezeigte Filter-Spiralmodul 1 weist Poren in einem Größenbereich von etwa von 0,01 bis 50 µm auf.

Das Permeatrohr 7 ist auf der dem einströmenden Medium 3 zugewandten Seite des Moduls 1 fest verschlossen, beispielsweise durch Verwendung eines entsprechenden Stopfens. Der unmittelbar an das Permeatrohr 7 angrenzende Bereich, welcher den Permeatträger 8 sowie die offene Seite der zur Tasche ausgeformten Schicht 2 umfaßt, ist auf der Seite des Moduls 1, auf welcher das Medium 3 einströmt, radial einerseits durch die Verdickungen der Schicht 2 an den Längsseiten 10 vom einströmenden Medium 3 abgedichtet, andererseits kann zusätzlich noch nach der Aufwicklung der einzelnen Schichten bzw. Permeatträger und Abstandshalter zu einem Modul sinterfähiges Pulver dort aufgebracht werden. Eine vollständige Dichtung erfolgt dann durch die der Aufwicklung nachfolgenden Sinterung. Der beim Sintern auftretende Schrumpf führt zu einem Druck während des Sintervorganges, der den Randbereich und die Taschen mit den Spacern fest zusammendrückt und so eine dichte und mechanisch belastbare Verbindung erzeugt.

In axialer Richtung des Moduls 1, d.h. über die Länge des Permeatrohres 7 hin, ist der Permeatträger 8 bzw. die zur Tasche ausgebildete Schicht 2 vom einströmenden Medium 3 einerseits durch die Schicht 2 selbst abgedichtet, andererseits kann auch hier durch Aufbringung von sinterfähigem Pulver eine zusätzliche axiale Dichtung zum einströmenden Medium 3 hin erfolgen. Hierdurch wird vermieden, daß das Permeat 12 vom einströmenden Medium 3 verunreinigt wird.

Da durch die Versinterung der einzelnen Bestandteile des Moduls 1 eine feste Verbindung dieser untereinander geschaffen wird, ist es nicht notwendig, das Anti-Telescoping-Mittel 14 vorzusehen, wie dies bei im Stand der Technik bekannten üblicherweise verwendeten Modulen aus polymeren Werkstoffen der Fall ist.. Hierdurch werden Materialkosten eingespart.

Die erfindungsgemäßen Module können aber auch als Hohlfasermodule oder Platten- und Kissenmodule ausgebildet sein. Die Hohlfasern können insbesondere durch Extrudieren hergestellt werden. Bei den Platten- und Kissenmodulen werden im Unterschied zu dem in Fig. 1 gezeigten Spiralmodul lediglich die einzelnen Schichten 2 nicht gerollt, sondern lediglich übereinandergelegt. Anschließend wird dann die Schicht, gegebenenfalls mit der Trennschicht und dem Permeatträger, vorzugsweise aus Metalldrahtgewebe, versintert.

## Patentansprüche

1. Modul zur Verwendung als Filter, Katalysator oder Erhitzer, umfassend mindestens eine Schicht (2) mit offener Porosität, welche eine einem in das Modul einströmenden Medium (3) zugewandte Außenseite (4) und eine dem einströmenden Medium (3) abgewandte Innenseite (5) aufweist, hergestellt aus einem sinterfähigen Material, ausgewählt aus einer Gruppe umfassend Metalle, Metalloxide, Metallverbindungen und/oder Metallegierungen, wobei die Schicht (2) taschenförmig ausgebildet ist und die Längsseiten der taschenförmig ausgebildeten Schicht (2) durch Sinterung abgedichtet sind, und wobei zusätzlich die Schichten (2) oder Bereiche einer Schicht (2) zueinander durch Sinterung gehalten sind.

2. Modul nach Anspruch 1, **dadurch gekennzeichnet, daß** die Schicht (2) in einem Modulgehäuse (6) angeordnet ist.

3. Modul nach einem der Ansprüche 1 oder 2, **dadurch gekennzeichnet, daß** das Modul mindestens eine auf einem Trägerkörper angeordnete Schicht (2) umfaßt.

4. Modul nach einem der vorhergehenden Ansprüche, **dadurch gekennzeichnet, daß** die Schicht (2) selbsttragend ist.

5. Modul nach einem der vorhergehenden Ansprüche, **dadurch gekennzeichnet, daß** die Schicht (2) eine Folie ist.

6. Modul nach einem der vorhergehenden Ansprüche, **dadurch gekennzeichnet, daß** die zur Tasche geformte Schicht (2) auf der Innenseite (5) an ihren Längsseiten (10) zumindest teilweise verdickt ist.

7. Modul nach einem der vorhergehenden Ansprüche, **dadurch gekennzeichnet, daß** die Schicht (2) um ein Permeatrohr (7) gewickelt ist.

8. Modul nach einem der vorhergehenden Ansprüche, **dadurch gekennzeichnet, daß** die Schicht (2) auf ihrer Innen (5)-und/oder Außenseite (6) profiliert ist.

9. Modul nach einem der vorhergehenden Ansprüche, **dadurch gekennzeichnet, daß** in der durch die Schicht (2) gebildeten Tasche ein Permeatträger (8) angeordnet ist.

10. Modul nach Anspruch 9, **dadurch gekennzeichnet, daß** der Permeatträger (8) mit etwa dem 0,2- bis 2fachen Umfang des Permeatrohrs um dieses gewickelt ist.

11. Modul nach Anspruch 9 oder 10, **dadurch gekennzeichnet, daß** der Permeatträger (8) etwa 2 bis 50 mm schmaler ist als die Schicht (2).

12. Modul nach einem der vorhergehenden Ansprüche, **dadurch gekennzeichnet, daß** auf der Außenseite (6) der Schicht (2) zumindest ein Abstandshalter (9) angeordnet ist.

13. Modul nach einem der vorhergehenden Ansprüche, **dadurch gekennzeichnet, daß** die Schicht (2) und/oder der Permeatträger (8) und/oder die Trennschicht (9) und/oder das Permeatrohr (7) versintert sind.

14. Verfahren zur Herstellung eines Moduls gemäß einem der vorhergehenden Ansprüche, **dadurch gekennzeichnet, daß** mindestens eine Schicht (2) zu einem Modul fixiert und anschliessend gesintert wird.

15. Verfahren nach Anspruch 14, **dadurch gekennzeichnet, daß** als Schicht (2) ein Grünling verwendet wird.

16. Verfahren nach einem der Ansprüche 14 oder 15, **dadurch gekennzeichnet, daß** aus der Schicht (2) eine Tasche gebildet wird, welche um ein Permeatrohr (7) gewickelt wird.

17. Verfahren nach einem der Ansprüche 14 bis 16, **dadurch gekennzeichnet, daß** auf der Innenseite (5) der Schicht (2) zumindest teilweise eine Verdickung an deren Längsseiten (10) ausgebildet wird.

18. Verfahren nach einem der Ansprüche 14 bis 17, **dadurch gekennzeichnet, daß** in die als Tasche ausgebildete Schicht (2) ein Permeatträger (8) eingelegt wird.

19. verfahren nach einem der Ansprüche 14 bis 18, **dadurch gekennzeichnet, daß** auf der Außenseite (4) der Schicht (2) eine Trennschicht (9) angeordnet wird.

20. Verfahren nach einem der Ansprüche 14 bis 19, **dadurch gekennzeichnet, daß** die Schicht (2) und/oder der Permeatträger (8) und/oder die Trennschicht (9) und/oder das Permeatrohr (7) versintert werden.

21. Verwendung eines Moduls nach einem der Ansprüche 1 bis 13 als Filter und/oder Katalysator und/oder Erhitzer.

## Claims

1. A module, for use as a filter, catalytic converter, or heater, which comprises at least one layer (2) having open porosity and an outer side (4) facing a medium (3) flowing into said module and an inner side (5) facing away from said inflowing medium (3), said layer being manufactured from a material that can be sintered and that is selected from a group comprising metals, metal oxides, metal compounds, and/or metal alloys, said layer (2) being fashioned in the form of a pocket and the longitudinal sides of said layer (2) formed as a pocket being sealed by sintering, and whereby, in addition, said layers (2) or regions of said layer (2) are held to one another by sintering.

2. A module according to Claim 1, **characterised in that** said layer (2) is situated in a module housing (6).

3. A module according to Claims 1 or 2, **characterised in that** said module comprises at least one layer (2) situated on a bearer element.

4. A module according to any of the preceding claims, **characterised in that** said layer (2) is self-supporting.

5. A module according to any of the preceding claims, **characterised in that** said layer (2) is a film.

6. A module according to any of the preceding claims, **characterised in that** said layer (2) shaped to form a pocket is at least partially thickened on its inner side (5) along its longitudinal sides (10).

7. A module according to any of the preceding claims, **characterised in that** said layer (2) is wound around a permeate tube (7).

8. A module according to any of the preceding claims, **characterised in that** said layer (2) is profiled on its inner side (5) and/or outer side (4).

9. A module according to any of the preceding claims, **characterised in that** in said pocket formed by said layer (2) a permeate bearer (8) is arranged.

10. A module according to Claim 9, **characterised in that** said permeate bearer (8), with a circumference of approximately 0.2 to 2 times that of said permeate tube, is wound around said permeate tube.

11. A module according to Claim 9 or 10, **characterised in that** said permeate bearer (8) is approximately 2 to 50 mm narrower than said layer (2).

12. A module according to any of the preceding claims, **characterised in that** on said outer side (4) of said layer (2) at least one spacing element (9) is arranged.

13. A module according to any of the preceding claims, **characterised in that** said layer (2) and/or said permeate bearer (8) and/or the separating layer (9) and/or said permeate tube (7) are fused by sintering.

14. A method for the manufacture of a module according to any of the preceding claims, **characterised in that** at least one layer (2) is fixed to a module and subsequently sintered.

15. A method according to Claim 14, **characterised in that** a green compact is used as said layer (2).

16. A method according to Claim 14 or 15, **characterised in that** a pocket is formed from said layer (2), which is wound around a permeate tube (7).

17. A method according to any of the Claims 14 through 16, **characterised in that** on the inner side (5) of said layer (2) a thickening is formed at least partially along its longitudinal sides (10).

18. A method according to any of the Claims 14 through 17, **characterised in that** a permeate bearer (8) is inserted into said layer (2) shaped as a pocket.

19. A method according to any of the Claims 14 through 18, **characterised in that** on the outer side (4) of said layer (2) a separating layer (9) is arranged.

20. A method according to any of the Claims 14 through 19, **characterised in that** said layer (2) and/or said permeate bearer (8) and/or said separating layer (9) and/or said permeate tube (7) are fused.

21. Use of a module according to any of the Claims 1 through 13 as filter and/or catalytic converter and/or heater.

## Revendications

1. Module servant de filtre, de catalyseur ou de réchauffeur comprenant au moins une couche (2) à porosité ouverte, qui présente une face extérieure (4) située en regard d'un fluide entrant dans le module et une face intérieure (5) tournée à l'opposé du fluide (3) entrant, réalisée à partir d'un matériau pouvant être fritté choisi parmi un groupe comprenant les métaux, les oxydes métalliques, les composés métalliques et/ou les alliages de métaux, la couche (2) présentant la forme d'une poche et les côtés longitudinaux de la couche (2) en forme de poche étant rendues étanches par frittage, et les couches (2) ou des zones d'une couche (2) étant également maintenues les unes par rapport aux autres par frittage.

2. Module selon la revendication 1, **caractérisé en ce que** la couche (2) est disposée à l'intérieur d'un boîtier de module (6).

3. Module selon l'une quelconque des revendications 1 ou 2, **caractérisé en ce que** le module comprend au moins une couche (2) disposée sur un corps de support.

4. Module selon l'une quelconque des revendications précédentes, **caractérisé en ce que** la couche (2) est autoportante.

5. Module selon l'une quelconque des revendications précédentes, **caractérisé en ce que** la couche (2) est une feuille.

6. Module selon l'une quelconque des revendications précédentes, **caractérisé en ce que** la couche (2) formée en poche est du moins partiellement épaissie sur la face intérieure (5) au niveau de ses côtés longitudinaux (10).

7. Module selon l'une quelconque des revendications précédentes, **caractérisé en ce que** la couche (2) est enroulée autour d'un tube à perméat (7).

8. Module selon l'une quelconque des revendications précédentes, **caractérisé en ce que** la couche (2) est profilée au niveau de sa face intérieure (5) et/ou extérieure (6).

9. Module selon l'une quelconque des revendications précédentes, **caractérisé en ce qu'**un support à perméat (8) est disposé dans la poche formée par la couche (2).

10. Module selon la revendication 9, **caractérisé en ce que** le support à perméat (8) est enroulé autour du tube à perméat avec sensiblement 0,2 à 2 fois la circonférence de celui-ci.

11. Module selon la revendication 9 ou 10, **caractérisé en ce que** le support à perméat (8) est sensiblement 2 à 50 mm plus mince que la couche (2).

12. Module selon l'une quelconque des revendications précédentes, **caractérisé en ce qu'**au moins un écarteur (9) est disposé sur la face extérieure (6) de la couche (2).

13. Module selon l'une quelconque des revendications précédentes, **caractérisé en ce que** la couche (2) et/ou le support à perméat (8) et/ou la couche de séparation (9) et/ou le tube à perméat (7) sont frittés.

14. Procédé de fabrication d'un module selon l'une quelconque des revendications précédentes, **caractérisé en ce qu'**au moins une couche (2) est fixée sur un module et ensuite frittée.

15. Procédé selon la revendication 14, **caractérisé en ce qu'**on utilise un compact vert comme couche (2).

16. Procédé selon l'une quelconque des revendications 14 ou 15, **caractérisé en ce qu'**on forme une poche à partir de la couche (2), laquelle poche est enroulée autour d'un tube à perméat (7).

17. Procédé selon l'une quelconque des revendications 14 à 16, **caractérisé en ce que** l'on forme un épaississement sur au moins une partie de la face intérieure (5) de la couche (2) au niveau des côtés longitudinaux (10) de celle-ci.

18. Procédé selon l'une quelconque des revendications 14 à 17, **caractérisé en ce que** l'on place un support à perméat (8) dans la couche (2) en forme de poche.

19. Procédé selon l'une quelconque des revendications 14 à 18, **caractérisé en ce que** l'on dispose une couche de séparation (9) sur la face extérieure (4) de la couche (2).

20. Procédé selon l'une quelconque des revendications 14 à 19, **caractérisé en ce que** la couche (2) et/ou le support à perméat (8) et/ou la couche de séparation (9) et/ou le tube à perméat (7) sont frittés.

21. Utilisation d'un module selon l'une quelconque des revendications 1 à 13 comme filtre et/ou catalyseur et/ou réchauffeur.
